# FASCICULE DE BREVET EUROPEEN

(11) **EP 0 976 939 B1**
(45) Date de publication et mention de la délivrance du brevet: **13.10.2004**
(21) Numéro de dépôt: 99401661.6
(22) Date de dépôt: 02.07.1999
(51) Int. Cl.: F16C 33/78, F16C 13/00

(54) **Etanchéité de palier à contact de roulement**
Dichtungsvorrichtung für ein Wälzlager
Sealing means for a rolling contact bearing

(30) Priorité: 29.07.1998 FR 9809713
(43) Date de publication de la demande: 02.02.2000
(73) Titulaire: SNR ROULEMENTS, 74010 Annecy Cédex (FR)
(72) Inventeur: Compassi, Jean-Jacques, 74960 Cran-Gevrier (FR)
(74) Mandataire: Srour, Elie

(56) Documents cités:
- EP-A- 0 286 151
- EP-A- 0 458 123
- EP-A- 0 794 345
- US-A- 4 830 518
- US-A- 5 402 556
- US-A- 5 649 772

## Description

L'invention concerne un roulement se déplaçant le long d'un rail de guidage lubrifié, tel qu'un roulement pour chaîne d'étirage de film, et vise plus particulièrement un roulement graissé à vie muni de moyens d'étanchéité permettant le fonctionnement durable de telles chaînes à grande vitesse.

Classiquement, les machines d'étirage de film, utilisées par exemple pour la réalisation de film d'emballage ou de film vidéo, comportent des rails de guidage s'éloignant progressivement l'un de l'autre et sur lesquels coulissent des chaînes munies de pinces destinées à étirer un film. Pour faciliter le coulissement de ces chaînes d'étirage le long du rail, les chaînes comportent des roulements faisant office de roues se déplaçant le long du rail de guidage, la bague intérieure du roulement étant montée par exemple en extrémité d'un axe de maillon de chaîne et la bague extérieure étant en appui contre le rail guidage. Pour éviter l'usure rapide de la bague extérieure au contact du rail lors du défilement sous contrainte de la chaîne, le rail de guidage est lubrifié par de l'huile, cette dernière étant fortement brassée au passage des roulements, ce qui génère un brouillard d'huile qui sollicite fortement l'étanchéité du roulement.

Une bonne étanchéité du roulement est alors une condition essentielle pour éviter la pénétration d'huile à travers le roulement et donc à la dégradation de la graisse à l'intérieur du roulement et assurer une longue utilisation de la chaîne d'étirage

A ce titre, le document EP 0458123 constituant l'état de la technique le plus proche, décrit un roulement présentant un joint d'étanchéité muni de plusieurs lèvres, dorit l'une peut être assimilée à un bossage servant de déflecteur pour les agents polluants.

Il est connu pour de telles chaînes d'étirage d'utiliser des roulements de type classique munis de joints à lèvre frottante, toutefois l'efficacité de tels joints, pour éviter l'introduction d'huile dans le roulement et la perte de graisse à l'extérieur du roulement, est limitée pour les grandes vitesses de rotation utilisées par les nouvelles machines d'étirage de film.

Le but de la présente invention est donc de proposer un roulement pour chaîne à l'étanchéité améliorée, de façon à ce que même pour les grandes vitesses d'étirage de film, de l'ordre de 500 m/mn, l'huile de lubrification du rail ne pénètre pas dans le roulement et que la graisse ne s'échappe pas du roulement et qui soit simple et économique à réaliser. L'invention a également pour but de proposer un roulement pour chaîne d'étirage qui puisse supporter des coupures d'huile de lubrification du rail de guidage sans usure excessive du diamètre extérieur du roulement.

A cet effet, l'invention concerne un roulement pour chaîne se déplaçant le long d'un rail de guidage lubrifié et comportant une bague intérieure reliée à la chaîne et une bague extérieure roulant en appui sur le rail de guidage, les bagues intérieure et extérieure étant séparées par des corps roulants et de chaque côté du roulement un joint d'étanchéité étant lié rigidement et d'une manière étanche à la bague extérieure du roulement.

Selon l'invention, le roulement est caractérisé en ce que le joint d'étanchéité comporte une armature métallique dont la face externe est surmoulée d'un matériau élastomère présentant un profil coudé vers l'extérieur du roulement pour chasser par centrifugation l'huile de lubrification du rail de guidage.

Selon une autre caractéristique de l'invention, le joint d'étanchéité comporte une armature métallique dont le bord périphérique extérieur est plié vers l'intérieur du roulement et dont la face externe est surmoulée d'un bossage en élastomère disposé à proximité de la périphérie extérieure du joint.

Selon une autre caractéristique de l'invention, le joint d'étanchéité comporte à proximité de la bague fixe une première et une seconde lèvres d'étanchéité s'appliquant, en étant précontrainte, sur une surface d'appui de la bague intérieure.

Selon une autre caractéristique de l'invention, la première lèvre s'étend sensiblement dans le plan de l'armature et la seconde lèvre s'étend vers l'intérieur du roulement par rapport à la première lèvre, la surface d'appui présentant une première portion axiale et une seconde portion inclinée par rapport à la première portion axiale destinées respectivement à recevoir les seconde et première lèvres.

Selon une autre caractéristique de l'invention, le joint d'étanchéité comporte un talon en élastomère s'insérant dans une gorge de la bague extérieure pour immobiliser le joint sur cette dernière.

Selon une autre caractéristique de l'invention, la bague extérieure au contact du rail comporte un traitement de surface anti-usure permettant d'éviter l'usure de la périphérie de la bague extérieure lors d'un défaut temporaire de lubrification du rail.

Selon une autre caractéristique de l'invention, la bague extérieure comporte un bandage constitué d'un matériau synthétique autolubrifiant permettant le fonctionnement de la chaîne sans lubrification extérieure de la zone de contact des roulements avec le rail de guidage.

L'invention concerne également une chaîne équipée de roulements définis ci-dessus et caractérisée par son utilisation sur une machine d'étirage de film à grande vitesse.

D'autres caractéristiques et avantages apparaîtront à la lecture de la description d'un exemple de roulement selon l'invention, en référence aux dessins dans lesquels :
- la figure 1 est une vue en coupe longitudinale d'une extrémité de maillon de chaîne d'étirage munie d'un roulement selon l'invention,
- la figure 2 est une vue à plus grande échelle du joint d'étanchéité du roulement de la figure 1.

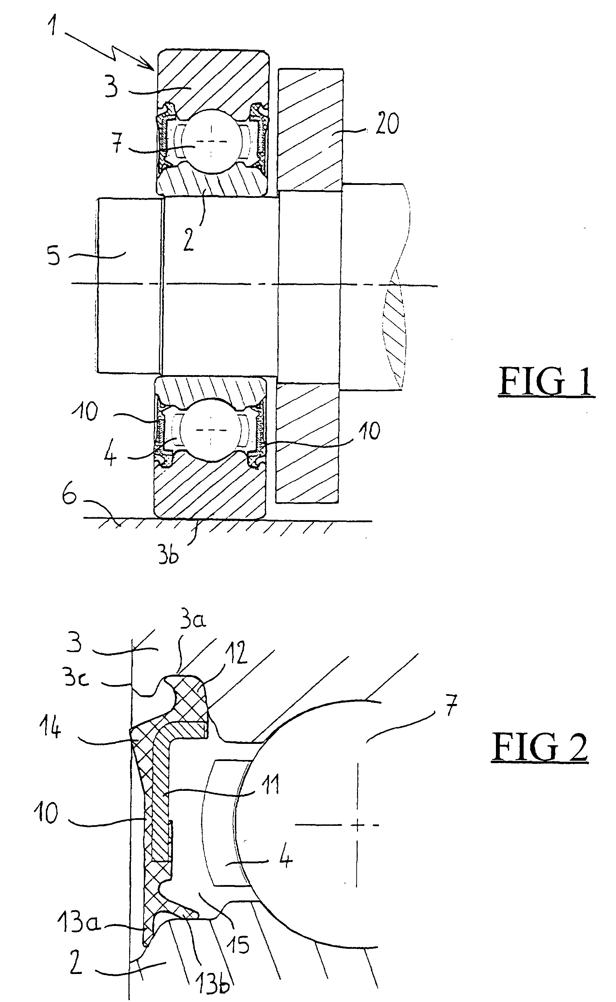

La figure 1 représente un roulement 1 monté sur une chaîne d'étirage de film. Ce roulement est constitué par une bague intérieure 2 montée sur l'axe 5 d'un maillon 20 de la chaîne, une bague extérieure 3 venant en appui contre un rail de guidage 6 et des corps roulants 7 guidés entre les deux bagues 2 et 3 dans une cage 4.

Le roulement 1 comporte, sur chacune de ses faces, un joint d'étanchéité 10 réalisé par surmoulage d'un matériau élastomère sur une armature métallique 11, les deux joints d'étanchéité 10 délimitant une cavité 15 comportant de la graisse destinée à la lubrification des corps roulants 7. L'armature métallique 11 présente une forme de rondelle annulaire et comporte, à son extrémité radiale externe, un bord replié supportant un talon 12 en élastomère fluoré venant s'insérer dans une gorge 3a de la bague extérieure 3 pour immobiliser le joint 10 en position.

Le joint d'étanchéité 10 comporte au niveau de l'extrémité radiale interne de l'armature métallique 11, un prolongement en élastomère présentant une première lèvre d'étanchéité 13a s'étendant dans le plan de l'armature et une seconde lèvre d'étanchéité 13b inclinée par rapport à la première lèvre, en direction de l'intérieur du roulement 1. Les lèvres d'étanchéité 13a et 13b sont au contact de la bague intérieure 2 au niveau d'une surface d'appui présentant une première portion parallèle à l'axe sur laquelle prend appui la seconde lèvre 13b pour éviter la perte de la graisse du roulement et une seconde portion, en bordure extérieure de la bague intérieure 2, inclinée par rapport à la première portion axiale et sur laquelle prend appui la première lèvre d'étanchéité 13a, cette dernière concourant principalement à empêcher l'entrée d'huile à travers le roulement 1.

Le joint d'étanchéité 10 comporte également, à proximité de l'extrémité radiale de l'armature métallique 11, un bossage à profil coudé 14 surmoulé sur la face externe de l'armature 11 et muni d'une pente s'orientant progressivement vers l'extérieur du roulement pour former un tremplin d'évacuation de l'huile présente dans l'environnement du joint d'étanchéité lors de la rotation de la bague extérieure 3 sur le rail de guidage 6.

Le dispositif d'étanchéité ainsi réalisé permet par la présence du bossage 14 d'éjecter, par la force centrifuge, les gouttelettes d'huile déposées sur la face externe du roulement 1 au-delà du bord 3c de la bague extérieure 3 et d'éviter ainsi l'accumulation d'huile au niveau de la gorge 3a à l'origine d'une forte sollicitation de l'étanchéité du talon 12 du joint d'étanchéité 10.

Par ailleurs, la disposition des lèvres d'étanchéité 13a et 13b permet leur autopositionnement sur la face d'appui de la bague intérieure 2 et donc le maintien de l'étanchéité du roulement 1 même lors d'un mauvais alignement des bagues intérieure 2 et extérieure 3 sous l'effet de la charge. et donc le maintien de l'étanchéité du roulement 1 même lors d'un mauvais alignement des bagues intérieure 2 et extérieure 3 sous l'effet de la charge.

Dans un mode de réalisation préférentiel de l'invention, un traitement de surface anti-usure, ou un bandage en matériau synthétique autolubrifiant, est déposé sur la bande de roulement 3b de la bague extérieure 3 sur le rail 6 de manière à permettre le fonctionnement temporaire de la chaîne d'étirage en l'absence de lubrification du rail de guidage 6 sans provoquer une usure excessive de la bande de roulement 3b.

Un tel roulement permet d'accroître de façon importante la durée de vie des chaînes d'étirage, en particulier pour les grandes vitesses de défilement, en empêchant toute insertion d'huile de lubrification du rail de guidage dans la graisse de lubrification des corps roulants et offre également une souplesse d'utilisation accrue des machines d'étirage, en particulier lors des pannes du dispositif de lubrification par projection d'huile du rail de guidage, en permettant le fonctionnement temporaire de la machine d'étirage par la présence d'un matériau autolubrifiant sur la bague extérieure du roulement.

Bien entendu, l'invention n'est nullement limitée au mode de réalisation décrit et illustré qui n'a été donné qu'à titre d'exemple.

## Revendications

1. Roulement (1) pour chaîne se déplaçant le long d'un rail de guidage (6) lubrifié, ledit roulement (1) comportant une bague intérieure (2) reliée à la chaîne et une bague extérieure (3) roulant en appui sur le rail de guidage (6), lesdites bagues intérieure. (2) et extérieure (3) étant séparés par des corps roulants (7) et de chaque côté du roulement un joint d'étanchéité (10) étant lié rigidement et d'une manière étanche à la bague extérieure (3) du roulement, ledit joint d'étanchéité(10) comportant une armature métallique (11) dont la face externe est surmoulée d'un matériau élastomère présentant un profil coudé vers l'extérieur du roulement (1) pour chasser par centrifugation l'huile de lubrification du rail de guidage (6), **caractérisé en ce que** la bague extérieure (3) comporte un bandage constitué d'un matériau synthétique autolubrifiant permettant le fonctionnement de la chaîne sans lubrification extérieure de la zone de contact des roulements (1) avec le rail de guidage (6).

2. Roulement selon la revendication 1, **caractérisé en ce que** ledit joint d'étanchéité (10) comporte une armature métallique (11) dont le bord périphérique extérieur est plié vers l'intérieur du roulement (1) et dont la face externe est surmoulée d'un bossage (14) en élastomère disposé à proximité de la périphérie extérieure du joint (10).

3. Roulement selon l'une quelconque des revendications 1 à 2, **caractérisé en ce que** ledit joint d'étanchéité (10) comporte à proximité de la bague fixe une première (13a) et une seconde (13b) lèvres d'étanchéité s'appliquant, en étant précontrainte, sur une surface d'appui de la bague intérieure (2).

4. Roulement selon la revendication 3, **caractérisé en ce que** ladite première lèvre (13a) s'étend sensiblement dans le plan de l'armature (11) et ladite seconde lèvre (13b) s'étend sensiblement vers l'intérieur du roulement par rapport à la première lèvre (13a), la surface d'appui présentant une première portion axiale et une seconde portion inclinée sensiblement par rapport à la première portion axiale destinées respectivement à recevoir les seconde (13b) et première (13a) lèvres.

5. Roulement selon l'une quelconque des revendications 1 à 4, **caractérisé en ce que** le joint d'étanchéité (11) comporte un talon (12) en élastomère s'insérant dans une gorge (3a) de la bague extérieure (3) pour immobiliser ledit joint (11) sur ladite bague extérieure (3).

6. Roulement selon l'une quelconque des revendications 1 à 5, **caractérisé en ce que** la bague extérieure (3) au contact du rail (6) comporte un traitement de surface anti-usure permettant d'éviter l'usure de la périphérie de la bague extérieure (3) lors d'un défaut temporaire de lubrification du rail (6).

7. Chaîne équipée de roulements selon l'une quelconque des revendications 1 à 6, **caractérisée en ce que** ladite chaîne est utilisée sur une machine d'étirage de film à grande vitesse.

## Patentansprüche

1. Lager (1) für ein Zugbauteil, welches sich entlang einer geschmierten Führungsschiene (6) verstellt, wobei das Lager (1) einen inneren Ring (2) aufweist, welcher mit dem Zugbauteil verbunden ist, und einen äußeren, laufenden Ring (3), welcher in Anlage an der Führungsschiene (6) rollt, wobei der innere Ring (2) und der äußere Ring (3) durch Rollkörper (7) voneinander getrennt sind und von jeder Seite des Lagers eine Dichtungsvorrichtung (10) fest und auf eine dichte Art und Weise mit dem äußeren Ring (3) des Lagers verbunden ist, wobei die Dichtungsvorrichtung (10) eine metallische Bewehrung (11) aufweist, deren äußere Fläche mit einem Elastomermaterial übergossen ist, welches ein in Richtung nach außen vom Lager (1) abgewinkeltes Profil aufweist, um durch Zentrifugierung das Schmieröl der Führungsschiene (6) zu schleudern, **dadurch gekennzeichnet, dass** der äußere Ring (3) eine Bandage aufweist, die aus einem selbst-schmierendem, synthetischen Material gebildet ist, welches den Betrieb des Zugbauteils ohne äußere Schmierung der Kontaktzone der Lager (1) mit der Führungsschiene (6) ermöglicht.

2. Lager gemäß Anspruch 1, **dadurch gekennzeichnet, dass** die Dichtungsvorrichtung (10) eine metallische Bewehrung (11) aufweist, deren peripherer äußere Rand in Richtung nach innen von dem Lager (1) umgebogen ist, und dessen äußere Fläche mit einem Vorsprung (14) aus Elastomer übergossen ist, welcher in der Nähe der äußeren Peripherie der Dichtung (10) angeordnet ist.

3. Lager gemäß irgendeinem der Ansprüche 1 bis 2, **dadurch gekennzeichnet, dass** die Dichtungsvorrichtung (10) in der Nähe des festen Rings eine erste (13a) und eine zweite (13b) Dichtigkeitslippe aufweist, welche sich unter einem Vorgespannt sein an eine Anlageoberfläche des inneren Rings (2) anlegt.

4. Lager gemäß Anspruch 3, **dadurch gekennzeichnet, dass** die erste Lippe (13a) sich im Wesentlichen in der Ebene der Bewehrung (11) erstreckt und die zweite Lippe (13b) sich im Wesentlichen nach innen im Lager im Verhältnis zur ersten Lippe (13a) erstreckt, wobei die Anlageoberfläche einen ersten axialen Abschnitt und einen zweiten Abschnitt aufweist, welcher im Wesentlichen im Verhältnis zum ersten axialen Abschnitt geneigt ist, welche jeweils zum Aufnehmen der zweiten Lippe (13b) und der ersten Lippe (13a) bestimmt sind.

5. Lager gemäß einem der Ansprüche 1 bis 4, **dadurch gekennzeichnet, dass** die Dichtungsvorrichtung (11) einen Ansatz (12) aus Elastomer aufweist, welcher sich in eine Vertiefung (3a) des äußeren Rings (3) einsetzt, um die Dichtung (11) an dem äußeren Ring (3) festzulegen.

6. Lager gemäß irgendeinem der Ansprüche 1 bis 5, **dadurch gekennzeichnet, dass** der äußere Ring (3) in Kontakt mit der Schiene (6) eine Anti-Abnutzungsoberflächenbehandlung aufweist, welche es ermöglicht, die Abnutzung der Peripherie des äußeren Rings (3) während einem temporären Versagen der Schmierung der Schiene (6) zu verhindern.

7. Zugbauteil, welches mit Lagern gemäß irgendeinem der Ansprüche 1 bis 6 ausgestattet ist, **dadurch gekennzeichnet, dass** das Zugbauteil an einer Filmzugmaschine bzw. Folienzugmaschine mit hoher Geschwindigkeit verwendet wird.

## Claims

1. A roller bearing (1) for a production line moving along a lubricated guide rail (6), this roller bearing (1) comprising an inner ring (2) connected to the line and an outer ring (3) rolling on the guide rail (6), these inner (2) and outer (3) rings being separated by rolling bodies (7) and, on each side of the roller bearing, a sealing gasket (10) being connected rigidly and in a leak-tight manner to the outer ring (3) of the roller bearing, the sealing gasket (10) comprising a metal reinforcement (11) whose outer surface is duplicate moulded with an elastomer material having a profile bent towards the exterior of the roller bearing (1) in order to remove by centrifugation the lubricating oil of the guide rail (6), **characterised in that** the outer ring (3) comprises a casing formed by a self-lubricating synthetic material enabling the line to operate without external lubrication of the zone of contact of the roller bearings (1) with the guide rail (6).

2. A roller bearing as claimed in claim 1, **characterised in that** the sealing gasket (10) comprises a metal reinforcement (11) whose outer peripheral edge is folded towards the interior of the roller bearing (1) and whose outer surface is duplicate moulded with a boss (14) of elastomer disposed in the vicinity of the outer periphery of the gasket (10).

3. A roller bearing as claimed in any one of claims 1 to 2, **characterised in that** the sealing gasket (10) comprises, in the vicinity of the fixed ring, a first and second sealing lip (13a, 13b) applied, and being pretensioned, to a bearing surface of the inner ring (2).

4. A roller bearing as claimed in claim 3, **characterised in that** the first lip (13a) extends substantially in the plane of the reinforcement (11) and the second lip (13b) extends substantially towards the interior of the roller bearing with respect to the first lip (13a), the bearing surface having a first axial portion and a second portion inclined substantially with respect to the first axial portion adapted respectively to receive the second (13b) and first (13a) lips.

5. A roller bearing as claimed in any one of claims 1 to 4, **characterised in that** the sealing gasket (11) comprises a heel (12) of elastomer inserted in a throat (3a) of the outer ring (3) in order to lock this gasket (11) on the outer ring (3).

6. A roller bearing as claimed in any one of claims 1 to 5, **characterised in that** the outer ring (3) in contact with the rail (6) comprises an anti-wear surface treatment making it possible to prevent the wear of the periphery of the outer ring (3) during a temporary defect in the lubrication of the rail (6).

7. A production line equipped with roller bearings as claimed in any one of claims 1 to 6, **characterised in that** this line is used on a high-speed film stretching machine.
